Europäisches Patentamt

European Patent Office

Office européen des brevets

(11) Publication number: **0 605 118 A2**

# EUROPEAN PATENT APPLICATION

(21) Application number: **93309766.9**

(22) Date of filing: **06.12.93**

(51) Int. Cl.⁵: **H02G 15/076**, H02G 9/10

(30) Priority: **30.12.92 US 998250**

(43) Date of publication of application:
**06.07.94 Bulletin 94/27**

(84) Designated Contracting States:
**DE ES FR GB IT NL**

(71) Applicant: **AT&T Corp.**
**32 Avenue of the Americas**
**New York, NY 10013-2412(US)**

(72) Inventor: **Gates, Frank Vernon**
**9 Yale Drive**
**Succasunna, New Jersey 07876(US)**
Inventor: **Kemp, Howard Martin**
**61 East Central Avenue**
**Wharton, New Jersey 07885(US)**
Inventor: **Williamson, David Howard**
**16 Armstrong Road**
**Morristown, New Jersey 07960(US)**

(74) Representative: **Johnston, Kenneth Graham et al**
**AT&T (UK) Ltd.**
**5 Mornington Road**
**Woodford Green Essex, IG8 OTU (GB)**

(54) **Underground electronics closure.**

(57) Disclosed is a closure for cables (17, 19) and electronic components (11, 12, 13). The closure includes a bell jar cover (30) with a vapor barrier (16) above its base to protect against both flooding and high humidity conditions.

*FIG. 1*

## Background of the Invention

This invention relates to closures for cables, apparatus, and electronic equipment.

A need exists in telecommunications equipment for housing cables and electronic components in order to protect the contents from the effects of harsh environments. For example, proposed fiber-in-the-loop systems include distant terminals with expensive electronics for serving several homes. Several types of aboveground closures exist for protecting such equipment. Such closures often include a bell jar cover to prevent flood waters from reaching the equipment. (See, e.g., U.S. Pat. No. 4,097,683 and U.S. Pat. No. 3,892,910.)

It is desirable for aesthetic reasons to bury the closure and electronics completely below ground. In such cases, the electronics must survive flood conditions and high humidity. A closure including a watertight seal could provide the needed protection, but would be expensive to manufacture. Further, such a closure would be undesirable since the electronics would not be easily accessible for routine maintenance and repair.

## Summary of the Invention

The invention is an apparatus for housing electronic equipment. The apparatus includes electronic components mounted to a base member, said base member comprising a material which provides an impedance to penetration of water vapor to the components. A bell jar cover including a base encloses the electronic components and the base member. The base member is mounted at a position above the base of the cover so that flood water cannot reach the base member when the apparatus is installed.

## Brief Description of the Drawing

In the drawing:

FIG. 1 is a front view of apparatus in accordance with an embodiment of the invention;

FIG. 2 is a view of the apparatus installed below ground illustrating a feature of the invention; and

FIG. 3 is a top view of a portion of an apparatus in accordance with an alternative embodiment.

It will be appreciated that, for purposes of illustration, these figures are not necessarily drawn to scale.

## Detailed Description

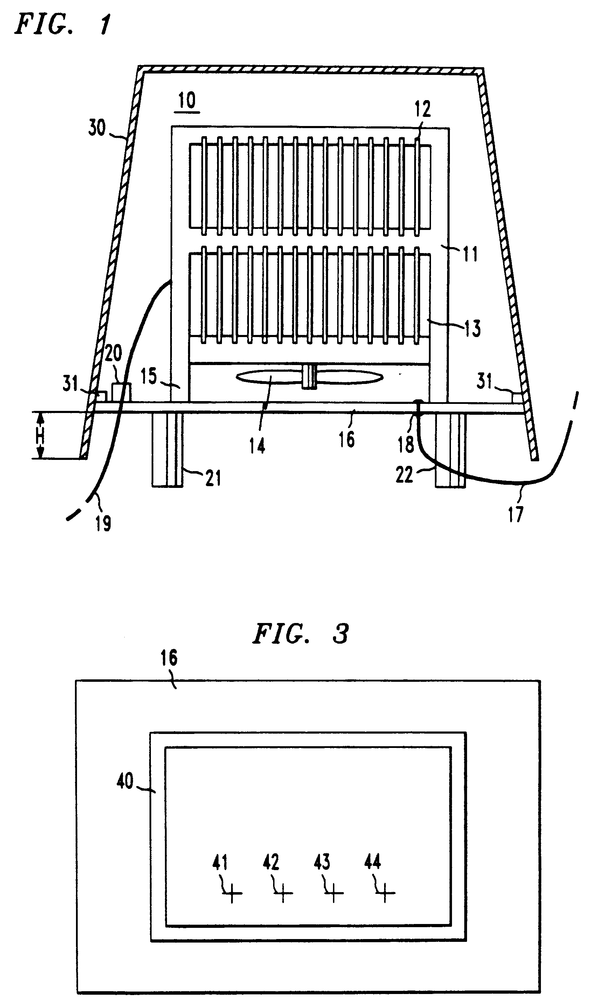

As shown in FIG. 1, the closure is designed to protect electronic equipment 10, such as a shelf assembly 11, including a plurality of circuit packs (e.g., 12), mounted therein. The circuit packs make electrical contact with a backplane 13. A fan 14 can be mounted below the circuit packs to provide cooling. The supports, (e.g., 15) of the shelf assembly are mounted to a base member 16, for example, by screwing.

The base member 16 is a material which will provide an impedance to water vapor reaching the circuit packs. In this example, the member was a horizontally mounted plate made of polycarbonate which is sold by General Electric under the trademark "LEXAN®". The thickness of the base member 16 is about 0.16 cm to 2.5 cm. Alternatively, as shown in FIG. 3, the base 16 could be a horizontally mounted rubber sheet supported by a metal frame 40 near its periphery to which the shelf assembly is mounted. Other materials, such as metal or plastic, could be used to provide the vapor barrier.

A power cable 17 can be supplied to the electronics through a hole (18) in the base member. Preferably, the hole 18 includes a moisture-resistant seal which inhibits penetration of water vapor. However, the seal does not have to be water-tight for reasons to be explained.

Incoming and outgoing cables, 19, can be coupled to the electronics through a foam rubber member 20. The foam rubber, which is typically of the closed-cell type, is provided over a slit in the base member through which the cables pass. Again, the foam rubber 20 is designed to provide an impedance to water vapor, but is not water-tight. If desired, the power cable 17 could also pass through the foam rubber member 20.

In case the base member 16 is rubber (FIG. 3), the cables can be brought in through slits 41-44 in the rubber without the need for foam rubber and other types of seals.

The base member 16 is supported by a pair of legs, 21 and 22, which are typically made of metal or plastic and attached to the surface of the base member opposite to the shelf assembly by fasteners. Alternatively, the base member frame (40 of FIG. 3) would be mounted to a latch frame (not shown) which is then bolted to the support frame in the underground access hole in which the closure will be situated.

A bell jar cover 30 is placed over the shelf assembly 11 and base member 16. The cover is essentially a truncated pyramid 30 structure having five surfaces and an open base (bottom) side. Alternatively, the cover could be cylindrical or hemispherical. In the embodiment of FIG. 1, the cover also includes means for mounting the base member 16 thereto at a predetermined distance above the open base, i.e., at some distance H from the edges of the vertical surfaces. In this example, the means for mounting the base member 16 above the base surface is a lip 31 disposed essentially parallel to the base (bottom) side of the cover and formed on the inside surface of all four vertical sides of the cover. The cover 30 therefore rests on the base member 16 and a portion of the cover extends the desired distance H below the base member. Alternatively, as in the example of FIG. 3, detents on the latch frame (not shown) could be provided to keep the base member 16 the desired distance H above the bottom of the cover.

The cover is typically made of plastic or metal and, in this example, measures approximately 43 cm x 36 cm x 28 cm. For reasons to be given, H is chosen to be approximately 10 cm. The cover can be latched or screwed to the base member by any of a number of means (not shown).

It will be appreciated that, since the cover 30 is a bell jar, the trapped air within the cover will prevent flood waters from extending any appreciable amount into the inside of the cover. Thus, as long as base member 16 is mounted above the bottom side of the cover a sufficient amount so that flood waters up to a design limit (e.g., 3.05 meters water depth) never reach it, the base member does not need any watertight seals. However, since the base member 16 covers essentially the entire horizontal area of the cover below the electronics 12 (except for holes and slits for cables), the base member provides effective impedance to ground moisture as well as water vapor in the environment. Preferably, the base member will cover at least 90 percent of the area in a horizontal plane below the electronics.

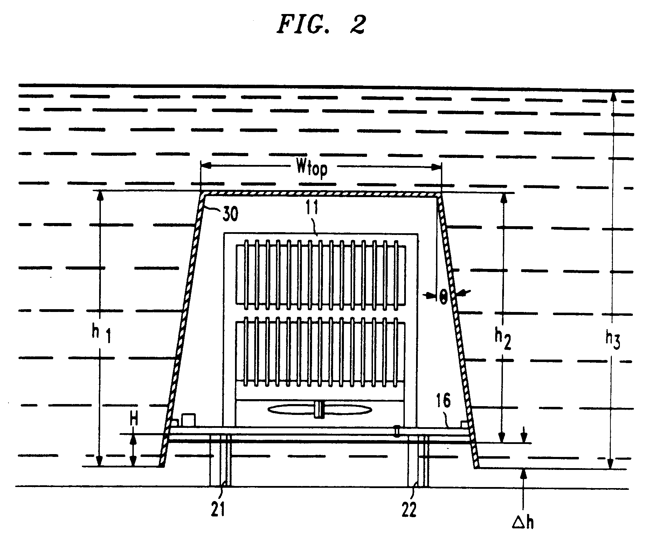

Flood protection is illustrated in the schematic view of FIG. 2. It is assumed that the maximum height, $h_3$, of the water level above the bottom surface of the cover 30 will be 3.05 meters. Water will penetrate into the bell jar an amount $\Delta h$ from the bottom surface of the cover, while the base plate 16 is mounted a greater distance (H) from the bottom surface. Assume that $V_1$ is the volume of air within the cover 30 at atmospheric conditions, $P_1$ is the air pressure within the cover at atmospheric conditions, $V_2$ is the volume of air within the cover under flood conditions, and $P_2$ is the air pressure inside the cover under flood conditions. According to the ideal gas law:

$$P_1 \ V_1 \ = \ P_2 \ V_2 \ . \qquad (1)$$

It can also be shown that for a truncated pyramid:

$$V_2 = 1/3 h_2 \left[ \left[ l_{top} + 2h_2 \tan \Theta \right] \left[ W_{top} + 2h_2 \tan \Theta \right] + l_{top} \ W_{top} \right.$$

$$\left. + \sqrt{ \left[ l_{top} + 2h_2 \tan \Theta \right] \left[ W_{top} + 2h_2 \tan \Theta \right] \left[ l_{top} \ W_{top} \right] } \right] \qquad (2)$$

where $h_2$ is the height of the dry portion of the cover, $l_{top}$ is the length of the top surface of the cover, $W_{top}$ is the width of the top surface of the cover, and $\Theta$ is the angle the vertical surfaces of the cover make with a plane perpendicular to the top surface of the cover. The height $h_2$ is chosen according to the space taken up by the electronics. From equation (2), $V_2$ can be calculated. Substituting $P_1$, $P_2$ and $V_2$ in equation (1) gives the volume $V_1$ needed for the cover. The necessary height, $h_1$, of the cover can then be calculated by substituting $V_1$ and $h_1$ in equation (2) in place of $V_2$ and $h_2$, and solving for $h_1$. The height (H) that the base member 16 must be above the bottom of the cover is H $>\Delta h$ where $\Delta h = h_1$-$h_2$.

In one example, $h_2$ was chosen as 0.33 meter based on the space required to house the electronics. Other values were: $l_{top}$ = 0.25 meter, $W_{top}$ = 0.33 meter, $\Theta$ = 3.37 degrees and $V_2$ = 0.032 meter$^3$. From equation (1) where $P_1$ = 101 KPa and $P_2$ = 131 KPa, this gave a value of $V_1$ = 0.041 meter$^3$. Placing the values of $V_1$ into equation (2) and solving for $h_1$ gave a value of 0.41 meter. This is the minimum height of the cover which will protect electronics placed a distance of $h_2$ = 0.33 meter from the top surface of the cover. That is, the minimum distance (H) of the base member 16 from the bottom surface needs to be 0.08 meter from the bottom surface of the cover to ensure protection under 3.05 meters of water. To provide a margin of safety, the cover was designed with a height $h_1$ of 0.43 meter so that the base member 16 was at a height (H) of 0.10 meter.

While the bell jar protects the electronics from flood water, the primary protection from water vapor due to ground moisture is provided by the base member 16. Humidity tests were conducted where the closure was placed in a pan of water to simulate water in an access hole including the closure and the water level was maintained about 5 cm below the base member. The closure and pan were placed in a chamber where the ambient humidity was maintained at 95 percent relative humidity and the temperature was cycled from 40° F to 90° F and back to 40° F once per day for one week. The electronics were powered during the tests with a maximum heat dissipation of 40 watts. The average values of humidity were 55.7 percent RH at the top of the shelf assembly and 71.8 percent RH at the top surface of the base member. The maximum humidity at the top of the shelf assembly was approximately 72 percent RH and the maximum humidity at the top surface of the base member was 81 percent RH. No condensation was observed inside the cover. It is generally desirable to keep the relative humidity less than 90 percent to avoid failures.

Various modifications will become apparent to those skilled in the art. All such variations which basically rely on the teachings through which the invention has advanced the art are properly considered within the scope of the invention.

## Claims

1. Apparatus for housing electronic equipment comprising:
   a bell jar cover (30) including a base enclosing the electronic components (11, 12, 13);
   CHARACTERIZED IN THAT
   electronic components are mounted to a base member (16), comprising a material which provides an impedance to penetration of water vapor and ground moisture to the components; and
   the base member is mounted to the cover at a position (H) above the base of the cover so that flood water cannot reach the base member when the apparatus is installed.

2. Apparatus according to claim 1 wherein the apparatus is adapted for installation below ground.

3. Apparatus according to claim 1 wherein the base member is mounted to a lip (31) on inside surfaces of the cover running essentially parallel to the base of the cover.

4. Apparatus according to claim 1 wherein the base member includes cables (17, 19) passing through apertures in said member, the apertures being sealed by material (18, 20) which does not form a watertight seal.

5. Apparatus according to claim 4 wherein the material of the seal comprises foam rubber.

6. Apparatus according to claim 1 wherein the base member comprises polycarbonate.

7. Apparatus according to claim 1 wherein the base member comprises a rubber sheet.

8. Apparatus according to claim 1 wherein the electronics comprise a plurality of circuit packs (12) mounted within a shelf assembly (11) mounted to the base member.

9. Apparatus according to claim 1 further comprising legs (21, 22) formed on a surface of the base member opposite to the surface to which the components are mounted in order to support the base member.

10. Apparatus according to claim 1 wherein the material of the cover comprises polycarbonate.

11. Apparatus according to claim 1 wherein the cover is a truncated pyramid shape with an open bottom surface.

12. Apparatus according to claim 1 wherein the base member is mounted in a horizontal plane of the cover below the electronic components and covers essentially the entire area of the horizontal plane.

## FIG. 1

## FIG. 3

# FIG. 2